# EUROPÄISCHE PATENTSCHRIFT

(11) **EP 1 953 517 B1**
(45) Veröffentlichungstag und Bekanntmachung des Hinweises auf die Patenterteilung: **13.07.2016**
(21) Anmeldenummer: 08000333.8
(22) Anmeldetag: 10.01.2008
(51) Int. Cl.: G01M 3/28

(54) **Anordnung zur Überwachung der Dichtigkeit eines evakuierten Raums**
Assembly for monitoring the permeability of an evacuated area
Agencement destiné à la surveillance de l'étanchéité d'une pièce évacuée

(30) Priorität: 05.02.2007 EP 07290146
(43) Veröffentlichungstag der Anmeldung: 06.08.2008
(73) Patentinhaber: Nexans, 75008 Paris (FR)
(72) Erfinder: Schippl, Klaus, 30659 Hannover (DE); Harten, Friedrich, 31655 Stadthagen (DE); Frohne, Christian, Dr., 30657 Hannover (DE)
(74) Vertreter: Döring, Roger

(56) Entgegenhaltungen:
- DE-A1- 3 938 371
- DE-A1- 10 117 329
- FR-A- 1 364 361
- US-A- 2 244 392
- US-A- 3 229 512
- US-A- 3 299 417
- US-A- 4 358 960
- US-A- 4 511 162
- US-A1- 2006 236 773

## Beschreibung

Die Erfindung betrifft eine Anordnung zur Überwachung der Dichtigkeit eines evakuierten Raums, der durch mindestens eine metallische Wandung hermetisch dicht verschlossen ist, bei welcher eine mit dem evakuierten Raum verbundene Einrichtung eingesetzt ist, die eine durch eine Undichtigkeit der Wandung hervorgerufene, unzulässige Druckerhöhung im evakuierten Raum anzeigt und bei welcher die Einrichtung aus einem metallischen Faltenbalg, der hermetisch dicht mit dem evakuierten Raum verbunden ist, und aus einem elektrischen Näherungsschalter besteht, an den eine Auswerteeinheit angeschlossen ist (DE 10117 329 A1).

"Evakuierter Raum" kann grundsätzlich jeder hermetisch abgedichtete Raum sein, in dem ein mehr oder weniger starkes Vakuum aufrechterhalten werden soll. Ein solcher evakuierter Raum - im folgenden "Vakuumraum" genannt - kann beispielsweise ein Teil eines Behälters oder eines Rohres bzw. eine Rohrleitung zur Führung eines gekühlten Mediums sein, beispielsweise eines tiefkalten flüssigen Gases, um das bzw. die herum eine nach außen durch ein metallisches Rohr abgeschlossene, unter Vakuum betriebene Vakuumisolierung angebracht ist. Bei dem Vakuumraum mit Vakuumisolierung kann es sich auch um den Zwischenraum zwischen zwei konzentrischen Metallrohren eines Kryostats für supraleitfähige Kabel handeln. Auf eine derartige Vakuumisolierung beziehen sich die weiteren Ausführungen, stellvertretend für alle anderen Einsatzmöglichkeiten.

Um eine Undichtigkeit - im folgenden kurz "Leck" genannt - in der "Hülle" eines Vakuumraums zu erkennen, reicht eine Ansprechschwelle von einigen kPa aus. Üblich für eine Vakuumisolierung sind Drücke im Bereich von 10⁻³ Pa. Die Vakuumisolierung verliert ihre Wirksamkeit weitgehend im von Bereich von 0,1 Pa. Beim Auftreten eines Die US 3,229,512 A beschreibt eine Druckmeßeinrichtung mit einem in einer evakuierten Kammer angeordneten Faltenbalg, der mit einer zweiten Kammer verbunden ist, deren Gasdruck gemessen werden soll. An der freien Stirnseite des Faltenbalges ist ein Stift angebracht, der an einem Diaphragma anliegt, auf dem eine elektrische Brückenschaltung abgeschieden ist. Die elektrischen Widerstände der Brückenschaltung ändern ihre Größe in Abhängigkeit von dem durch den Faltenbalg aufgebrachten Druck. Diese Widerstandsänderungen können als Maß für den Gasdruck in der zweiten Kammer mittels eines Voltmeters erfaßt werden.

JP2001349500 und US 4 511 162 offenbaren andere Leckdetektionsanordnungen mit einem Faltenbalg.

Diese Aufgabe wird gemäß der Erfindung dadurch gelöst,
- daß der Näherungsschalter in Bewegungsrichtung des Faltenbalges mit einem Abstand zur Stirnseite desselben angebracht ist, dessen Größe in Abhängigkeit von der jeweiligen axialen Länge des Faltenbalges variabel ist,
- daß um den Faltenbalg herum unter Einhaltung eines Luftspaltes ein fest mit der Wandung verbundenes Rohr angebracht ist, das den Faltenbalg feuchtigkeitsdicht umschließt und das länger als der Faltenbalg in dessen längster, dem entspannten Zustand entsprechender Ausgangsposition ist, und
- daß der Näherungsschalter gegenüber dem Rohr abgedichtet in dasselbe hineinragt.

Diese Anordnung ist sehr einfach aufgebaut und sie benötigt keine aufwendigen Meßgeräte. Es wird nur ein handelsüblicher metallischer Faltenbalg mit dem Vakuumraum verbunden, wozu in dessen Wandung, beispielsweise einem metallischen Rohr, eine entsprechend große Öffnung anzubringen ist. Wenn der Faltenbalg von innen zusammen mit dem Vakuumraum evakuiert wird, dann wird er verkürzt. Beim Auftreten eines Lecks in der Wandung des Vakuumraums steigt der Druck in demselben an und der Faltenbalg dehnt sich in Richtung seiner dem entspannten Zustand entsprechenden Ausgangsposition aus, die er vor der Evakuierung eingenommen hat. Das wird vom Näherungsschalter detektiert, bei dem es sich um einen handelsüblichen Näherungsschalter handeln kann. Erreicht der Faltenbalg bei einer unerwünschten Druckerhöhung im Vakuumraum eine bestimmte, voreingestellte Position, dann wird das vom Näherungsschalter zur auswertbaren Anzeige gebracht. Von wesentlicher Bedeutung bei dieser Anordnung ist das den Faltenbalg feuchtigkeitsdicht umschließende Rohr. Es behindert die Bewegung des Faltenbalges nicht, da rundum ein Luftspalt belassen ist. Das Rohr ist axial so lang ausgeführt, daß es auch über den Faltenbalg in seiner größten Länge hinausragt, welche der Ausgangsposition im entspannten Zustand entspricht. Das Rohr ragt so weit über den Faltenbalg hinaus, daß der Näherungsschalter zumindest teilweise mit umschlossen wird, welcher gegenüber dem Rohr abgedichtet ist. Der Faltenbalg und der relevante Teil des Näherungsschalters sind so durch das Rohr auch gegenüber rauhen Umweltbedingungen, wie Regen und Schmutz, geschützt und eine Vereisung des Faltenbalges kann ausgeschlossen werden.

Ein Ausführungsbeispiel des Erfindungsgegenstandes ist in der Zeichnung dargestellt.

Es zeigen:
Fig. 1 schematisch einen Schnitt durch eine von einem Vakuumraum umgebenes Rohrleitung mit angeschlossener Anordnung nach der Erfindung in ihrer Ausgangsposition.
Fig. 2 die Rohrleitung mit in Arbeitsposition befindlicher Anordnung.

Die Erfindung wird im folgenden am Beispiel einer Rohrleitung erläutert - wieder stellvertretend für alle anderen, eingangs geschilderten Einsatzmöglichkeiten.

Mit 1 ist ein beispielsweise aus Edelstahl bestehendes Rohr einer Rohrleitung bezeichnet, um das herum koaxial und mit Abstand beispielsweise ein ebenfalls aus Edelstahl bestehendes Außenrohr 2 angeordnet ist. Beide Rohre 1 und 2 sind durch Abstandshalter 3 in ihrer gegenseitigen Position gehalten. Der hermetisch abgedichtete Zwischenraum zwischen den beiden Rohren 1 und 2 bildet einen Vakuumraum 4, der zur Bildung einer Vakuumisolierung der Rohrleitung evakuiert ist.

An das Außenrohr 2 ist ein beispielsweise radial von demselben abstehender Faltenbalg 5 hermetisch dicht angeschlossen, und zwar über einem im Außenrohr 2 befindlichen Loch 6. Der Faltenbalg 5 kann ebenfalls aus Edelstahl bestehen, mit einer Wandstärke zwischen beispielsweise 0,1 mm und 0,4 mm. Es kann aber auch ein anderes Material für den Faltenbalg 5 eingesetzt werden, wie beispielsweise Kupfer oder ein glasfaserverstärkter Kunststoff.

In Achsrichtung des Faltenbalges 5 ist mit Abstand zu demselben ein nur schematisch angedeuteter elektrischer Näherungsschalter 7 angeordnet, der mit einer Auswerteeinheit 8 verbunden ist. Der Näherungsschalter 7 ist mit Vorteil ein handelsüblicher Näherungsschalter, der induktiv oder kapazitiv arbeiten kann. Die Auswerteeinheit 8 kann ein nur anzeigendes Gerät sein. Sie kann aber mit Vorteil auch mit einer Alarmeinrichtung gekoppelt sein.

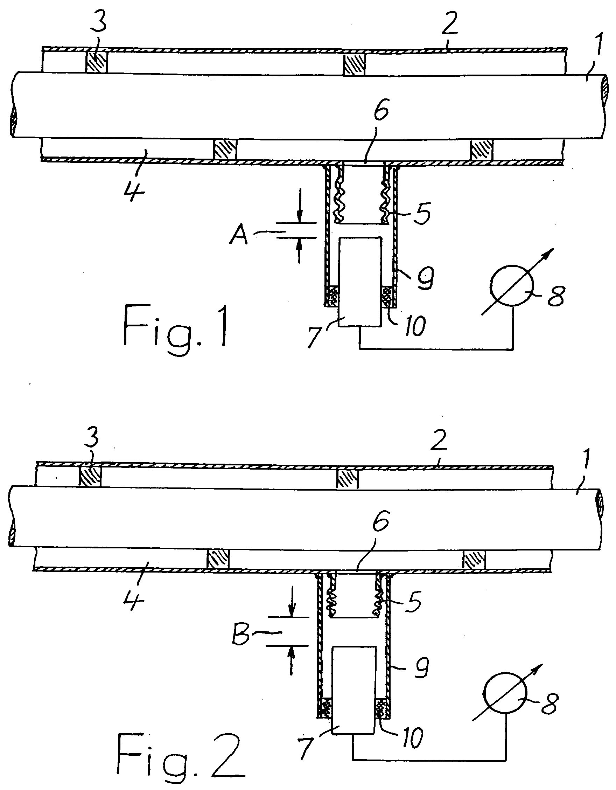

In Fig. 1 ist der Faltenbalg 5 in seiner seinem entspannten Zustand entsprechenden Ausgangsposition dargestellt, in welcher der Vakuumraum 4 noch nicht evakuiert ist. Er ist in dieser Ausgangsposition durch eine Strecke A vom Näherungsschalter 7 getrennt. Bei Erzeugung eines Vakuums im Vakuumraum 4 wird der Faltenbalg 5 ebenfalls evakuiert. Dadurch wird er nach und nach durch den Außendruck gestaucht und damit verkürzt. Diese Arbeitsposition des Faltenbalges 5 ist in Fig. 2 gezeigt. Er ist in dieser Arbeitsposition durch eine gegenüber der Strecke A größere Strecke B vom Näherungsschalter 7 getrennt.

Um den Faltenbalg 5 herum ist ein Rohr 9 angeordnet, daß fest und dicht mit dem Außenrohr 2 verbunden und vorzugsweise als metallisches Rohr mit demselben verschweißt ist. Das Rohr 9 ist axial länger als der Faltenbalg 5 in seiner größten, in Fig. 1 gezeigten Länge. Es ist durch einen umlaufenden Luftspalt vom Faltenbalg 5 getrennt, so daß dessen axiale Beweglichkeit nicht behindert wird. Das Rohr 9 ist so lang, daß es auch den Näherungsschalter 7 zumindest teilweise mit umschließt. Der Näherungsschalter 7 ist gegenüber dem Rohr 9 durch ein Dichtelement 10 abgedichtet. Faltenbalg 5 und Näherungsschalter 7 sind so durch das Rohr 9 feuchtigkeitsdicht umschlossen und dadurch gegebenenfalls gegen Witterungseinflüsse geschützt.

Nach der Befestigung von Faltenbalg 5 und Rohr 9 am Außenrohr 2 wird der Näherungsschalter 7 positioniert. Dazu wird derselbe aktiviert und beispielsweise in das dann mit einem Innengewinde versehene Rohr 9 so weit eingeschraubt, bis der Näherungsschalter 7 anspricht. Er ist dann so weit an den Faltenbalg 5 angenähert, daß derselbe erkannt ist. Aus Sicherheitsgründen wird der Näherungsschalter 7 nach dem Ansprechen noch etwas näher an den Faltenbalg 7 herangebracht, damit ein Ansprechen desselben dann auf jeden Fall gewährleistet ist, wenn der Faltenbalg 5 sich beim Betrieb der Anordnung im Falle eine Druckerhöhung ausdehnt. Diese Position des Näherungsschalters 7 entspricht der in Fig. 1 dargestellten, mit dem für die Ansprechschwelle der Vakuumüberwachung wichtigen Abstand A zwischen Faltenbalg 5 und Näherungsschalter 7. Bei der hier geschilderten Ausführung der Anordnung stellt die Schraubverbindung zwischen Rohr 9 und Näherungsschalter 7 das Dichtelement 10 dar, welches das Rohr 9 hermetisch abdichtet.

Die Anordnung nach der Erfindung arbeitet beispielsweise wie folgt:
Nach der Positionierung des Näherungsschalter 7 werden der Vakuumraum 4 und damit der Faltenbalg 5 evakuiert, so daß derselbe seine aus Fig. 2 ersichtliche Arbeitsposition einnimmt. Der Abstand zwischen Faltenbalg 5 und Näherungsschalter 7 entspricht dann der gegenüber der Strecke A größeren Strecke B. Die Strecke B muß so groß sein, daß der Näherungsschalter 7 nicht anspricht. Wenn der Faltenbalg 5 sich aufgrund eines Lecks im Vakuumraum 4 und eines dadurch bedingten Druckanstiegs ausdehnt, dann kann er bis zu seiner aus Fig. 1 ersichtliche Ausgangsposition verlängert werden, in welcher sein Abstand zum Näherungsschalter 7 der Strecke A entspricht. Dadurch werden der Schaltabstand des Näherungsschalters 7 bzw. die Ansprechschwelle der Vakuumüberwachung erreicht.

Sobald der Näherungsschalter 7 detektiert hat, daß der Faltenbalg 5 sich so wie beschrieben ausgedehnt hat, gibt er ein Signal an die Auswerteeinheit 8 ab. Dieses Signal kann in der Auswerteeinheit 8 lediglich angezeigt werden. Es kann auch zur Auslösung eines Alarms führen oder einer übergeordneten Prozeßsteuerung aufgegeben werden, durch welche der Betrieb der Rohrleitung automatisch abgebrochen werden kann.

Die Positionierung des Näherungsschalters 7 in Bewegungsrichtung des Faltenbalges 5 hat den weiteren Vorteil, daß im Falle einer sehr großen Druckerhöhung in der Anordnung eine Überdehnung und damit eine Zerstörung des Faltenbalges 5 verhindert werden kann. Eine entsprechende Bewegung des Faltenbalges 5 wird dann durch den Näherungsschalter 7 gestoppt, wenn derselbe mit seiner Stirnseite am Näherungsschalter 7 anliegt.

## Patentansprüche

1. Anordnung zur Überwachung der Dichtigkeit eines evakuierten Raums, der durch mindestens eine metallische Wandung hermetisch dicht verschlossen ist, bei welcher eine mit dem evakuierten Raum verbundene Einrichtung eingesetzt ist, die eine durch eine Undichtigkeit der Wandung hervorgerufene, unzulässige Druckerhöhung im evakuierten Raum anzeigt und bei welcher die Einrichtung aus einem metallischen Faltenbalg, der hermetisch dicht mit dem evakuierten Raum verbunden ist, und aus einem elektrischen Näherungsschalter besteht, an den eine Auswerteeinheit angeschlossen ist, **dadurch gekennzeichnet,**
- **daß** der Näherungsschalter (7) in Bewegungsrichtung des Faltenbalges (5) mit einem Abstand zur Stirnseite desselben angebracht ist, dessen Größe in Abhängigkeit von der jeweiligen axialen Länge des Faltenbalges (5) variabel ist,
- **daß** um den Faltenbalg (5) herum unter Einhaltung eines Luftspaltes ein fest mit der Wandung (2) verbundenes Rohr (9) angebracht ist, das den Faltenbalg (5) feuchtigkeitsdicht umschließt und das länger als der Faltenbalg (5) in dessen längster, dem entspannten Zustand entsprechender Ausgangsposition ist, und
- **daß** der Näherungsschalter (7) gegenüber dem Rohr (9) abgedichtet in dasselbe hineinragt.

2. Anordnung nach Anspruch 1, **dadurch gekennzeichnet, daß** der Näherungsschalter (7) in einer Position angebracht ist, deren Entfernung vom Faltenbalg (5) durch die Länge desselben definiert ist, welche er in der seinem entspannten Zustand entsprechenden Ausgangsstellung hat.

3. Anordnung nach Anspruch 1 oder 2, **dadurch gekennzeichnet, daß** der Näherungsschalter (7) in das mit einem Innengewinde versehene Rohr (9) eingeschraubt ist.

## Claims

1. Arrangement for monitoring the leak-tightness of an evacuated space which is hermitically closed by at least one metallic wall, in which a device is used which is connected to the evacuated space and which indicates an inadmissible pressure rise in the evacuated space caused by a leak in the wall, and in which a device is provided which contains a metallic bellows, which is hermetically connected to the evacuated space, and an electrical proximity switch to which an evaluation unit is connected, **characterized in**
- **that** the proximity switch (7) is mounted in the direction of movement of the bellows (5), at a distance from the end face of the latter, the size of which is varied as a function of the respective axial length of the bellows (5),
- **that** a tube (9) which is connected fixedly to the wall (2) is mounted around the bellows (5), with maintaining an air gap, which surrounds the bellows (5) in a moisture-tight manner and which is longer than the bellows (5) in its longest initial position corresponding to the relaxed state of the same, and
- **that** the proximity switch (7) projects into the tube (9) and is sealed relative to the same.

2. Arrangement according to claim 1, **characterized in that** the proximity switch (7) is mounted in a position, the distance of which to the bellows (5) is defined by the length of the same, which it has in the initial position corresponding to its released state.

3. Arrangement according to claim 1 or 2, **characterized in that** the proximity switch (7) is screwed into the tube (9), which has an internal thread.

## Revendications

1. Agencement destiné à la surveillance de l'étanchéité d'une pièce évacuée qui est fermée de manière hermétiquement étanche au moyen d'une paroi métallique, dans lequel on utilise un dispositif connecté à la pièce évacuée qui indique une augmentation de pression inadmissible dans la pièce évacuée provoqué par un défaut d'étanchéité de la paroi et dans lequel le dispositif se compose d'un soufflet métallique qui est connecté de manière hermétiquement étanche à la pièce évacuée et d'un détecteur de proximité électrique auquel est raccordée une unité d'évaluation, **caractérisé en ce**
- **que** le détecteur de proximité (7) est monté dans la direction de déplacement du soufflet (5) à une certaine distance du côté frontal de celui-ci, distance dont la valeur peut varier en fonction de la longueur axiale respective du soufflet (5),
- **que** un tube (9) connecté fixement à la paroi (2) est monté tout autour du soufflet (5) en conservant un entrefer, lequel tube entoure le soufflet (5) de manière étanche à l'humidité et est plus long que le soufflet (5) dans sa position de départ la plus longue, correspondant à l'état détendu, et
- **que** le détecteur de proximité (7) pénètre dans le tube (9) de manière étanchéifiée par rapport à celui-ci.

2. Agencement selon la revendication 1, **caractérisé en ce que** le détecteur de proximité (7) est monté dans une position dans laquelle la distance au soufflet (5) est définie par la longueur qu'il présente dans sa position de départ correspondant à son état détendu.

3. Agencement selon la revendication 1 ou 2, **caractérisé en ce que** le détecteur de proximité (7) est vissé dans le tube (9) pourvu d'un filetage interne.
